# EUROPEAN PATENT APPLICATION

(11) **EP 2 720 020 A1**
(43) Date of publication of application: **16.04.2014**
(21) Application number: 12188558.6
(22) Date of filing: 15.10.2012
(51) Int. Cl.: G01L 11/02, G01L 19/00, G01L 23/06, F23Q 7/00, F02P 19/02

(54) **Pressure sensing plug with integrated optical pressure sensor**

(71) Applicant: HIDRIA AET Druzba za proizvodnjo vzignih sistemov in elektronike d.o.o., 5220 Tolmin (SI)
(72) Inventor: Klobucar, Rok, 2000 MARIBOR (SI); Donlagic, Denis, 2000 MARIBOR (SI); Gverino, Ratosa, 6280 ANKARAN (SI)
(74) Representative: Cabinet BARRE LAFORGUE & associés

(57) **Abstract**

The invention concerns a pressure sensing plug for measuring a cylinder pressure prevailing in a chamber of a cylinder of a piston(s) machine, comprising a body (13), a pressure sensor arranged to be subjected to said cylinder pressure and adapted to supply a pressure signal representative of said cylinder pressure, and a signal transmission link extending from said pressure sensor to a proximal end of said body so as to be able to transmit said pressure signal out of said cylinder. Said signal transmission link comprises at least one optical fiber (20), and said pressure sensor is an optical sensor (24) joined to a distal end (23) of said at least one optical fiber (20) and supported thereby so as to extend in said chamber when said body is mounted on said cylinder.

## Description

The invention relates to a pressure sensing plug for measuring a cylinder pressure prevailing in a chamber of a cylinder of a piston(s) machine -in particular but not exclusively a pressure sensing glow plug for measuring a cylinder pressure prevailing in a combustion chamber of a cylinder of an internal combustion engine such as a diesel engine-.

Such a pressure sensing plug comprises a body having an external mounting portion adapted to cooperate with a cylinder head bore for mounting said plug on said cylinder, and at least one pressure sensing device supported by said body, and comprising:
- a pressure sensor arranged to be subjected to said cylinder pressure when said body is mounted on said cylinder, said pressure sensor being adapted to supply a pressure signal representative of said cylinder pressure,
- a signal transmission link extending from said pressure sensor to a proximal end of said body so as to be able to transmit said pressure signal out of said cylinder.

A pressure sensing glow plug for a diesel engine also includes a heating rod supported in a central axial bore of said body and having a distal portion axially protruding from said body so as to extend in said chamber when said body is mounted on said cylinder. Such a pressure sensing glow plug adapted to be mounted on a cylinder of an internal combustion engine performs simultaneously two functions:
a) a preheating of the gas mixture, the intake air, or the combustion chamber of the diesel engine, and
b) pressure measurements during the combustion cycles.

A localized heating of a diesel engine combustion is used during diesel engine cooled start and other similar combustion regimes where additional heating is required to start or otherwise support operation of the diesel engine. Pressure measurements during combustion cycle are predominately used by to support engine management control such as adjustment of fuel injection to achieve optimal combustion. Pressure measurement for combustion closed-loop control is needed to optimize internal combustion engines operation, such as for reducing fuel consumption, reducing emissions, and compensate for ageing effects of the motor components.

Such a pressure sensing plug can also be used in other kinds of piston(s) machine, such as pumps, for example for monitoring and/or control purposes.

US20090242540 discloses a glow plug which comprises a heater rod connected to a proximal end of the plug by a center shaft, and a piezoelectric pressure sensing sleeve surrounding said center shaft. Such a pressure sensor is situated out of the combustion chamber where sufficient cooling is available to allow application of materials with lower operational temperature range. Thus, in such a construction, pressure is indirectly measured through deformation of a piezoelectric element placed where temperatures are sufficiently reduced to allow operation of the said piezoelectric element. This distal retraction of the sensor from combustion space can lead to reduced measurement fidelity that is reflected in reduced accuracy, sensor bandwidth and increased susceptibility to interference.

The invention is thus aimed at overcoming these disadvantages of the prior art, by proposing a plug which includes a pressure sensor, and in which:
- said pressure sensor is directly exposed to said chamber atmosphere -in particular to gases in a combustion chamber-, and is adapted to withstand its extreme conditions -in particular its extreme pressure and/or temperature-,
- the pressure sensor can be retracted in an area of the plug where the temperatures are lower, notably significantly lower, than within said chamber -in particular within the combustion chamber of a diesel engine-, while providing positioning of the pressure sensor directly into the atmosphere of said chamber,
- said pressure sensor does not need to be in direct contact with the plug body or housing, and in particular supplies signals representing the cylinder pressure with no interference from the characteristics of the mechanical link between the sensor and, on the one hand, the heating rod (when provided), and, on the other hand, the plug body, in the largest possible pass band, which in particular can exceed 8 kHz, with an improved fidelity,
- said pressure sensing device has a high eigen-frequency, which leads to high immunity to interference arising from mechanical vibrations,
- sealing and integration of the sensor into the plug assembly is simplified and cheaper, in particular can be done with the use of a large variety of low operating temperature range selling materials,
- said pressure sensing device can be made entirely from material that is high temperature resistant, thermally shock resistant, and has low coefficient of thermal expansion, good chemical resistance, and fast, reliable and good signal transmission properties, and provides with a high tolerance to electromagnetic interference, does not cause any additional electromagnetic interference that could influence other electronic components (such as those on board a vehicle),
- said pressure sensor does not affect the lifetime and reliability of the plug,
- said pressure sensor can be mounted in the plug housing, and with no other component than a sealing material, allowing for minimal modification of existing plugs to achieve pressure measurements function of the said plugs,
- said pressure sensor can be integrated into the smallest available types of plugs, allowing saving of available useful space, providing a high degree of freedom in the cylinder head design, contributing to improve the reliability and engine performances and to the design of more compact and efficient engines,
- the sensitivity of said pressure sensor is optimised, so that the signals which the latter supplies make it possible to detect pressure variations of relatively small values (with the aim of making it possible to detect better the different phases of variations of pressure, irrespective of the piston(s) machine model or its speed, and thus making possible finer control of the latter by the electronics which process these signals).

To this end, the invention concerns a pressure sensing glow plug for measuring a cylinder pressure prevailing in a chamber of a cylinder of a piston(s) machine -in particular in a combustion chamber of a cylinder of an internal combustion engine-, said pressure sensing glow plug comprising:
(i) a body having an external mounting portion adapted to cooperate with a cylinder head bore for mounting said plug on said cylinder,
(ii) a heating rod supported in said body and having a distal portion axially protruding from said body so as to extend in said chamber when said body is mounted on said cylinder,
(iii) at least one pressure sensing device supported by said body and comprising:
   - a pressure sensor arranged to be subjected to said cylinder pressure when said body is mounted on said cylinder, said pressure sensor being adapted to supply a pressure signal representative of said cylinder pressure,
   - a signal transmission link extending from said pressure sensor to a proximal end of said body so as to be able to transmit said pressure signal out of said cylinder,
   **characterized in that**:
   - said signal transmission link comprises at least one optical fiber,
   - said pressure sensor is an optical sensor joined to a distal end of said at least one optical fiber and supported thereby so as to extend in said chamber when said body is mounted on said cylinder
   - said body comprises a longitudinal recess:
      i. extending along said body,
      ii. having a distal end emerging from a distal portion of the body extending in the distal direction from said external mounting portion thereof,
and in that said at least one optical fiber extends in said longitudinal recess and is accommodated thereby.

Said at least one optical fiber provides two functions. Firstly, according to the invention, said at least one optical fiber protrudes into the space of said chamber and positions said optical pressure sensor into said space. Said at least one optical fiber thus provides mechanical support for said optical pressure sensor and suspends it directly into said space. Secondly, said at least one optical fiber carries optical signals to and from said optical pressure sensor. To this end, said at least one optical fiber has a proximal end which is adapted to be linked to a light source and to a light signal receiver (said source and receiver not necessarily being part of the plug according to the invention, though they may be integrated in a proximal portion thereof).

Said optical pressure sensor is directly exposed to the gases in the chamber. Said optical fiber sensor does not need to be in direct contact with the plug body or housing.

Instead, according to the invention, it is said at least one optical fiber which comes in contact with the plug body or housing.

In a particular and advantageous application of the invention, the pressure sensing plug according to the invention is also **characterized in that** said body comprises a central axial bore extending between said proximal end thereof and a distal end thereof, and in that said heating rod is supported in said central axial bore of said body.

Said longitudinal recess is adapted to accommodate said at least one optical fiber. Its proximal end is situated more proximal than said external mounting portion of the body. Its distal end is situated more distal than said said external mounting portion of the body. Preferably said longitudinal recess extends between a proximal end portion of said body and a distal end portion of said body. Said longitudinal recess may also have a proximal end emerging from a proximal portion of said body extending in the proximal direction from said external mounting portion thereof.

Since the length of said at least one optical fiber between the optical pressure sensor and a distal end of said longitudinal recess can be in the range between 0 and several millimeters or even centimeters, said distal end of said longitudinal recess can be retracted in an area of the plug where the temperatures are lower, and more particularly significantly lower than within the combustion chamber of the engine, while providing positioning of said optical pressure sensor directly into the atmosphere of said chamber.

This significantly simplifies sealing and integration of said optical pressure sensor into the plug assembly since lower operating temperature range sealing materials can be used. Sensors suitable as optical pressure sensor in the plug according to the invention may be fusion spliced at the distal tip of said at least one optical fiber, and therefore permit for broad operating temperature range that is required for in-cylinder use.

Said optical pressure sensor can be made entirely from material that is high temperature resistant. Said material can be thermally shock resistant, can have low coefficient of thermal expansion, good chemical resistance, and good optical transmission properties. Said material of fiber and sensor can be for example fused silica or doped fused silica, sapphire or other similar material.

The fact that said optical pressure sensor is supported by said at least one optical fiber into said chamber has several advantages. Firstly, the optical pressure sensor mounting process into the plug body or housing is reduced to the mounting and sealing of said at least one optical fiber into the same body or housing. Since no additional components or assemblies, except sealing material, are required for said at least one optical fiber and optical pressure sensor mounting and packing and since said optical pressure sensor produced at a tip of an optical fiber are typically of a diameter that is not greater than the optical fiber diameter, the integration of said optical pressure sensor within a plug according to the invention allows for minimal modification of existing plugs to achieve pressure measurements function of the said plugs.

According to the invention, said optical pressure sensor can be integrated into the smallest available types of glow plugs. Size reduction of any in-cylinder components is highly desired as it saves constrained space available for mounting of such components into the cylinder heads. Small components thus allow for higher degree of freedom in cylinder head and combustion chamber design. Smaller components might also contribute to improve the reliability and the engine performance. More compact and efficient engines can be consequently designed.

Secondly, direct placement of said optical pressure sensor into the space of said chamber increases the fidelity of the pressure measurements. According to the invention, said optical pressure sensor is directly positioned into said space and thus does not suffer from the consequences of pressure sensor retraction from said space or other indirect pressure measurement methods.

Thirdly, the retraction of the distal end of said longitudinal recess into a low temperature area of the plug allows for application of wide variety of sealing materials including low temperature resistant sealing materials, such as epoxy resins. This can significantly simplify the production process and cost of the plug assembly.

Additionally, the invention provides a full dielectric design of the optical pressure sensing device. This provides high tolerance to electromagnetic interference and does not cause any additional electromagnetic interference that could influence other electronic components, such as those encountered in a modern vehicle. Furthermore said optical pressure sensor diameter is typical smaller than the diameter of said at least one optical fiber and has thus a high eigen-frequency, which leads to high immunity to interference arising from mechanical vibrations.

Additionally, advantageously and according to the invention, said at least one optical fiber consists in one optical fiber supporting said optical pressure sensor at its distal end protruding from said distal end of said longitudinal recess. By the way, only one optical fiber is generally sufficient to provide for the required pressure signals. In some applications several optical fibers and/or several optical process sensors may be provided in only one plug according to the invention.

In some embodiments of the invention, said body comprises a generally cylindrical peripheral wall having a longitudinal axis, and said longitudinal recess comprises at least one side longitudinal through-hole longitudinally extending through at least a part of the length of said wall. Advantageously, and according to the invention, said through-hole longitudinally extends between said proximal portion and said distal portion of the body, at least substantially parallel to its longitudinal axis.

In another variant which may be combined to the preceding one, advantageously and according to the invention, said body comprises a generally cylindrical external face comprising said external mounting portion adapted to cooperate with a cylinder head bore for mounting said plug on said cylinder, and said longitudinal recess comprises a side longitudinal groove recessed from said external face of said body and longitudinally extending along at least a part of the length of said external face. Said external mounting portion of said body may be a threaded portion thereof, or may be otherwise realized. Advantageously, and according to the invention, said longitudinal groove longitudinally extends between said proximal portion and said distal portion of the body, at least substantially parallel to its longitudinal axis.

According to the invention said longitudinal recess may thus be formed at least partly by a hole and/or a through-hole and/or at least partly by a longitudinal groove.

Furthermore, advantageously and according to the invention, said longitudinal recess and said at least one optical fiber extends at least substantially parallel to a longitudinal axis of said body. In other possible embodiments they may be on the contrary slightly inclined with regard to said longitudinal axis of said body.

Additionally, according to the invention, it is possible to optimize the placement of the optical pressure sensor with regards the plug body or housing, in particular in view of simplifying its mounting and/or optimizing its working. Advantageously and according to some embodiments of the invention, said distal end of said longitudinal recess is remote (towards the proximal side) from a distal end of said body or housing, inside said body or housing. Also, said distal end of said at least one optical fiber protrudes from said distal end of said longitudinal recess. According to the length of said at least one optical fiber which protrudes from said distal end of said longitudinal recess, said distal end of said at least one optical fiber is or not inside said body or housing. According to some embodiments of the invention, said distal end of said at least one optical fiber is remote (towards the proximal side) from said distal end of said body or housing, inside said body or housing. Thus, according to some embodiments of the invention, said optical pressure sensor may be also remote towards the proximal side from said distal end of said body or housing, inside said body or housing. Those embodiments are in particular (but not exclusively) advantageous in the case of a glow plug for a diesel engine. In other embodiments, said optical pressure sensor protrudes towards the distal side from said distal end of said body or housing.

Furthermore, advantageously and according to the invention, said body and said at least one optical fiber are bonded together by a sealing material. More particularly at least a portion of said at least one optical fiber is bonded by such a bonding material to at least a portion of said longitudinal recess of said body or housing. Said bonding material may be chosen among any appropriate material according to said at least one optical fiber and said body or housing materials. Advantageously and according to the invention, said sealing material is chosen from the group constituted of solder glass, epoxy resins, and metallic materials.

Additionally, said at least one optical fiber may be or not coated. In some preferred embodiments of the invention, said at least one optical fiber has a coating extending over at least a part of its length. Furthermore, advantageously and according to the invention, said sealing material is applied in a coated portion of said at least one optical fiber. As a variant or in combination, said sealing material is applied in a bare portion of said at least one optical fiber.

In a glow plug according to the invention said optical pressure sensor may be realized as a separate piece independently from said at least one optical fiber, and then rigidly fixed to the distal end (tip) of said at least one optical fiber. However the invention allows the manufacture of the optical pressure sensor integrally with said at least one optical fiber. Thus, advantageously and according to some embodiments of the invention, said optical pressure sensor is integral to said distal end of said at least one optical fiber.

In some embodiments, a pressure sensing glow plug according to the invention is adapted to be mounted on a cylinder of an internal combustion engine, more particularly of a diesel engine.

The invention also concerns a glow plug characterized in combination by all or some of the characteristics mentioned above or below.

Other objects, characteristics and advantages of the invention will appear on reading the following description, which refers to the attached figures, which represent embodiments of the invention as non-limiting examples, and in which:
- figure 1 is a schematic axial section view of a glow plug according to a first embodiment of the invention, illustrated as being mounted in a bore of a cylinder head, the upper part of the heating rod being represented uncut,
- figure 2 is a schematic view in elevation of a glow plug according to the first embodiment of the invention, illustrated before being mounted on a cylinder head and with a partial cutaway only represented for illustrative purpose,
- figure 3 is a schematic view in perspective of a glow plug according to the first embodiment of the invention, illustrated before being mounted on a cylinder head and with a partial cutaway only represented for illustrative purpose,
- figure 4 is a schematic view in partial axial section of a detail of figure 2, at the distal end portion of the body,
- figure 5 is a schematic view in perspective of a detail of the partial cutaway only represented for illustrative purpose of figure 3, at the distal end portion of the body,
- Figs. 6a, 6b are schematic views in perspective of glow plugs according to various embodiments conforming to the invention,
- figure 7 is a schematic view in elevation of a glow plug according to a second embodiment of the invention, illustrated before being mounted on a cylinder head and with partial cutaways only represented for illustrative purpose,
- figure 8 is a schematic view in perspective of a glow plug according to the second embodiment of the invention, illustrated before being mounted on a cylinder head and with a partial cutaway only represented for illustrative purpose,
- figure 9 is a schematic view in partial axial section of a detail of figure 7, at the distal end portion of the body,
- figure 10 is a schematic view in perspective of a detail of the partial cutaway only represented for illustrative purpose of figure 8, at the distal end portion of the body,
- figure 11 is a schematic view in elevation of a glow plug according to a third embodiment of the invention, illustrated before being mounted on a cylinder head and with a partial cutaway only represented for illustrative purpose,
- figure 12 is a schematic view in perspective of a glow plug according to the third embodiment of the invention, illustrated before being mounted on a cylinder head and with a partial cutaway only represented for illustrative purpose,
- figure 13 is a schematic view in partial axial section of a detail of figure 11, at the distal end portion of the body,
- figure 14 is a schematic view in perspective of a detail of the partial cutaway only represented for illustrative purpose of figure 12, at the distal end portion of the body,
- figure 15 is a schematic view in elevation of a glow plug according to a fourth embodiment of the invention, illustrated before being mounted on a cylinder head and with a partial cutaway only represented for illustrative purpose,
- figure 16 is a schematic view in perspective of a glow plug according to the fourth embodiment of the invention, illustrated before being mounted on a cylinder head and with a partial cutaway only represented for illustrative purpose,
- figure 17 is a schematic view in partial axial section of a detail of figure 15, at the distal end portion of the body,
- figure 18 is a schematic view in perspective of a detail of the partial cutaway only represented for illustrative purpose of figure 16, at the distal end portion of the body.

A glow plug 11 with an integrated optical pressure sensor according to the first embodiment of the invention comprises a body forming a housing 13, and a heating rod (glow element) 14 having a proximal portion 14a accommodated inside a central axial bore 27 of said housing 13 and a distal portion 14b protruding from said housing 13 so as to extend into a combustion chamber 16 of a cylinder of an engine 15 on which the glow plug is mounted.

The housing 13 comprises a main central portion 13c having a generally cylindrical peripheral wall 33, said wall 33 having a longitudinal axis 34 corresponding to the axis of said central axial bore 27, and a generally cylindrical external face 35 having an external threaded mounting portion 12 adapted to cooperate with a tapped portion of a cylinder head bore 19 for mounting said glow plug on said cylinder. Said external mounting portion 12 extends in a proximal portion 13a of said housing 13. The housing 13 also forms a hexagonal nut 17 at its proximal portion 13a, said nut 17 extending outside the cylinder head of the engine 15, allowing the screwing of said glow plug in said bore 19. The housing 13 also as a chamfered distal end 18b adapted to abut against a corresponding tapered shoulder 25 of said bore 19, so as to provide a sealing between said housing 13 and said bore 19. Preferably, the central axial bore 27 axially extends through the housing 13 between its distal end 18b and its proximal end 18a.

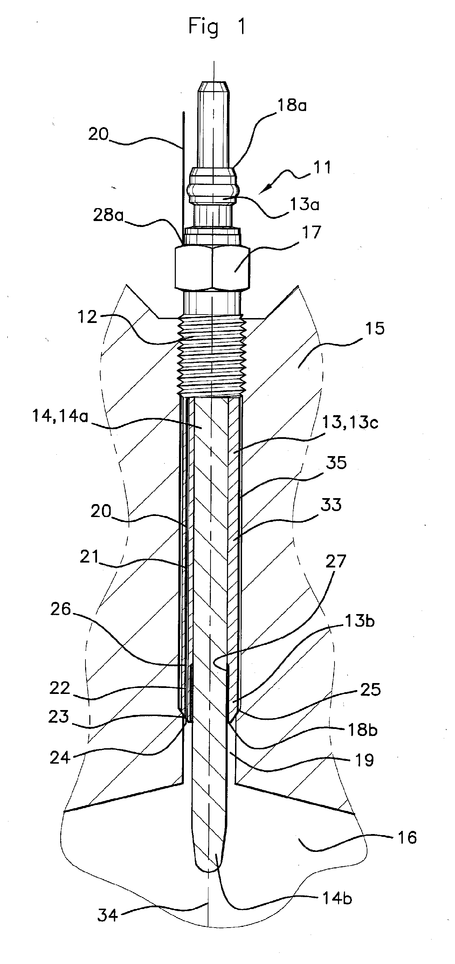

The glow plug 11 also comprises an optical fiber 20 and an optical pressure sensor 24 joined to the distal end tip 23 of said optical fiber 20. The optical fiber 20 is inserted through a longitudinal recess, which is made of a through-hole 21 in the embodiment represented on figures 1 to 5, said longitudinal recess extending in the axial direction through and along the glow plug housing 13, and through the hexagonal nut 17. The longitudinal recess extends along the housing 13 so as to accommodate the optical fiber 20, and has a distal end 28b emerging from a distal portion 13b of the housing extending in the distal direction from said external mounting portion 12.

In some embodiments where the optical fiber 20 extends outside the plug, the longitudinal recess also has a proximal end 28a emerging from the proximal portion 13a of the housing 13 extending in the proximal direction from said external mounting portion 12 and the optical fiber 20 protrudes from said proximal end 28a.

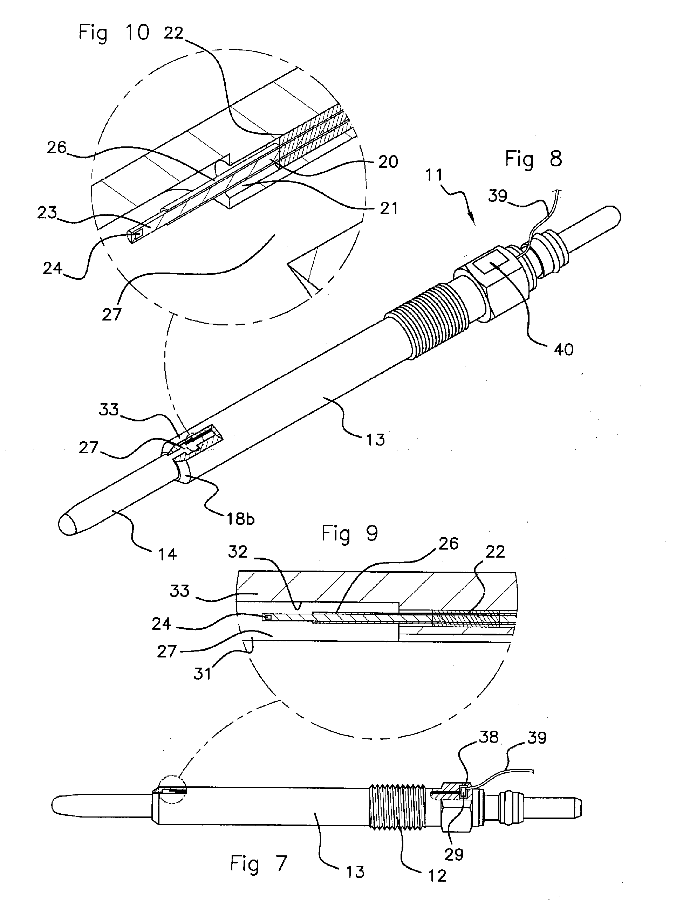

In other embodiments (figures 7 and 8) the optical fiber 20 does not protrude in the proximal direction outside the housing 13. The proximal end of the optical fiber 20 is connected to a circuit 29 accommodated in an enlarged proximal portion 38 of the longitudinal recess, and an electrical connection cable 39 is connected to said circuit 29 and extends in a proximal extension of the longitudinal recess or in a specific through-hole emerging from the proximal portion 13a of the housing 13, so that said cable protrudes outside the housing 13. The enlarged proximal portion 38 of the longitudinal recess receiving said circuit 29 has a removable access door 40 for insertion of the circuit 29 in said enlarged proximal portion 38 of the longitudinal recess.

The optical fiber 20 has a distal portion which partially extends into the combustion chamber 16. The optical fiber 20 is fixed to the glow plug housing 13 inside said longitudinal through-hole 21 by a sealing material 22. The volume of the through-hole 21 between the optical fiber 20 and the glow plug housing 13 can be partially or fully filled by said sealing material 22. Said filling of the through-hole 21 provides a pressure tight sealing of the through-hole 21 and thus prevents any exchange or flow of gas between the combustion chamber 16 and the outside environment.

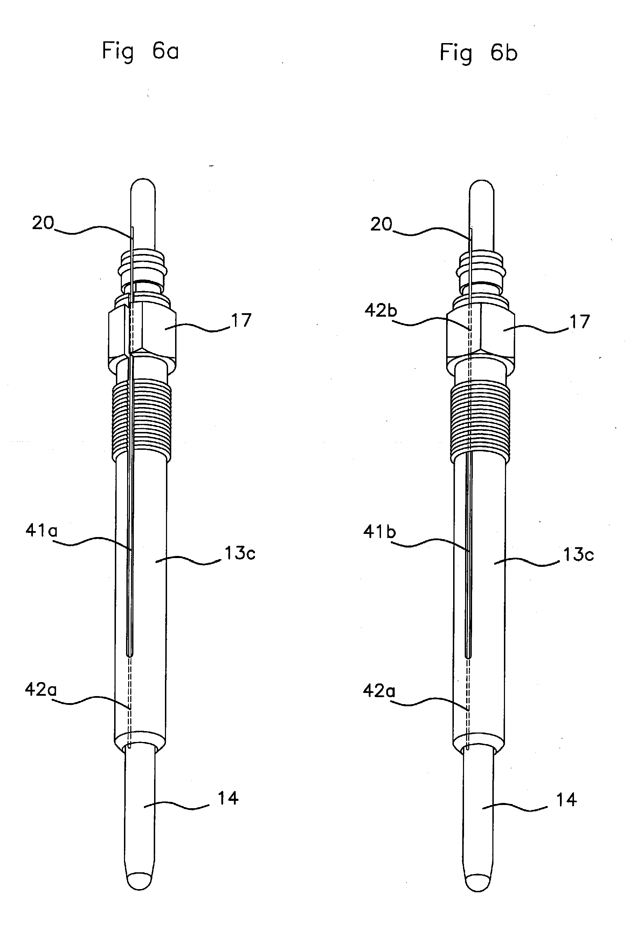

Instead of the through-hole 21, said longitudinal recess receiving the optical fiber 20 can be at least partially made by a side longitudinal groove 41a, 41b, named channel, recessed from said external face of said housing and longitudinally extending along at least a part of the length of said external face. Such a channel 41a, 41b can be made so as to extend along a longitudinal portion of said glow plug housing 13 and/or along said external mounting threaded portion 12 and/or along said hexagonal nut 17 and/or along the proximal portion 13a of the housing and/or a part of those portions, such as for example shown in figures 6a and 6b.

In figure 6a, a channel 41a is made along the main central portion 13c of the housing 13, including said external mounting threaded portion 12 and said hexagonal nut 17. However the channel 41a does not extend as far as the distal end 18b of the housing 13 nor along the proximal portion 13a of the housing. On the contrary, it is continued by a through-hole 42a made at the distal portion 13b of the housing. In this way, the sealing made between the housing 13 and the bore 19 by the distal end 18b of the housing and the tapered shoulder 25 is not affected by the thus formed longitudinal recess receiving the optical fiber 20.

In figure 6b, a first channel 41b is made along a longitudinal central portion 13c of the housing, but not alone said external mounting threaded portion 12 nor along said hexagonal nut 17, where said longitudinal recess receiving the optical fiber 20 is made of a through-hole 42a, 42b. A second through-hole 42b is made through said hexagonal nut 17, from which the optical fiber 20 protrudes in the proximal direction. There again the channel 41b does not extend as far as the distal end 18b of the housing 13.

The manufacturing of such a miniature channel 41a, 41b on a longitudinal portion of the outer side of the glow plug body is less complex than manufacturing of a miniature and long through-hole. The confinement of the optical fiber 20 within the body of the glow plug, by placing it into the longitudinal recess, protects this optical fiber 20 against mechanical damage during the glow plug installation and operation.

Also the empty space in such a channel 41a, 41b or its part between the optic fiber 20 and the glow plug housing 13 can be filed with a sealing material 22 to bond (fix), seal and mechanically protect the optical fiber.

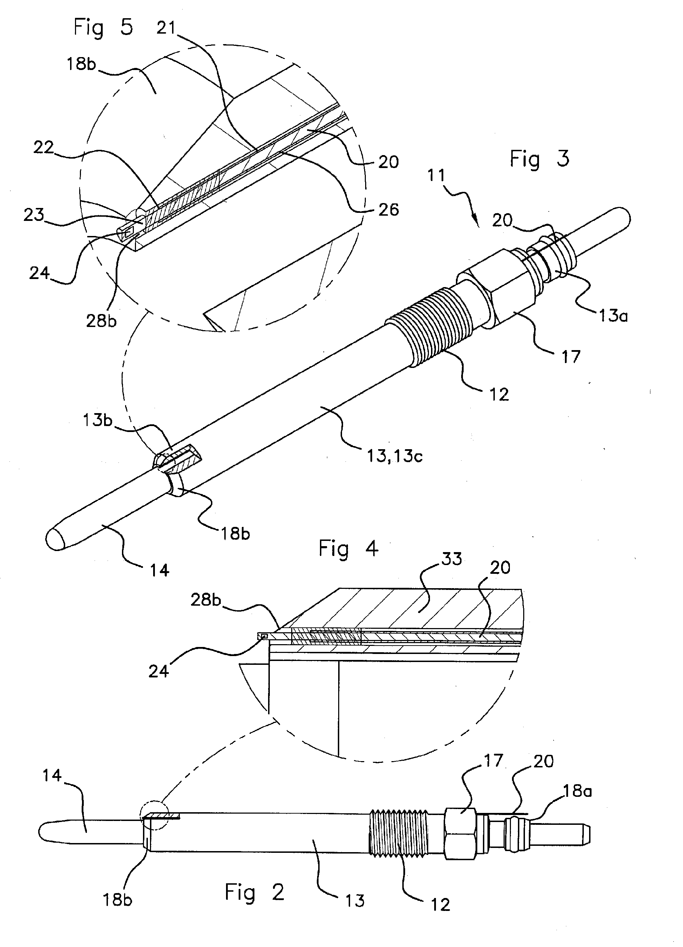

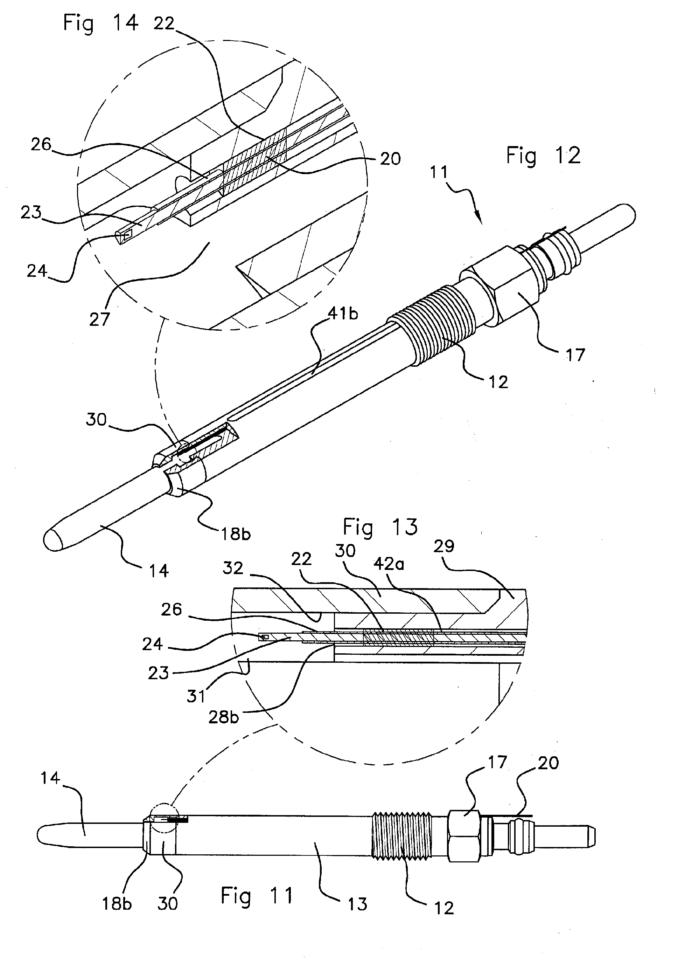

The distal end tip 23 of the optical fiber 20, containing pressure sensor 24, should not be sealed or embedded in such a sealing material 22, as shown in figures 5, 10, 14, and 18, so as to provide a free access of combustion chamber gases to said pressure sensor 24.

Different sealing materials can be used, such as for example sealing glass, solder glass, silver soldering, brazing materials, high temperature epoxy resins or their combinations. In some embodiments the optical fiber 20 can be bonded into the longitudinal recess of the housing 13 in an area where the temperatures are considerably lower than the temperatures of the gases in the combustion chamber during the operating processes of the glow plug. Typically, such an area of the glow plug will be in a good contact with cooled engine block. Since the temperature in the area of the bonding is not as high as in the combustion chamber, a great range of sealing materials can be used, such as for example high temperature epoxy resins. Such epoxy resins have many advantages. They are for example easy to handle, they exhibit good elasticity, low viscosity, simple dosing, fast curing, and high degradation temperature.

The optical fiber 20 may be coated with a coating 26 extending over the full length or only over a partial length of the fiber. Different high temperature resistance materials can be used as coating 26, for example a material chosen in the group constituted of polyimide and metals.

Such a coating 26 protects the optical fiber 20 against mechanical damage and acts as a barrier to lateral forces. It protects the glass fiber from surface damage that could lead to fiber strength degradation and failures. If it comes into contact with said optical fiber coating 26, said sealing material 22 must be chosen so as to be chemically compatible with said coating 26. The sealing material 22 must also be chosen with a curing or solidification process which is also compatible with optical fiber coating 26.

In most of the embodiments, at least a short length portion of the optical fiber 20, near its distal tip 23 and the sensor 24, does not have any coating. The distal tip 23 of the optical fiber 20 can be bonded and sealed into the through-hole in different ways.

In a first way of bonding, said distal tip 23 having no coating is placed in direct contact with the sealing material. The sealing material thus provides a pneumatic sealing between the silica cladding of the optical fiber 20 and the through-hole of the housing. For such a sealing high temperature sealing materials must be used, for example a hot melt sealing material which is applied in a melted state and solidified by cooling. Such an example of hot melt sealing material is solder glass.

Another way of bonding said optical fiber 20 into said through-hole may be achieved by applying a sealing material in an area of the fiber having a coating 26. If this coating 26 is made of metal, such as gold, aluminum or copper, the same metal or another metallic material, such as silver, can be used as sealing material 22. Such a brazing metallic sealing material 22 is also applied by thermal melting followed by cooling and solidification.

In another way of bonding said optical fiber 20 into said through-hole, a high temperature epoxy is used for sealing an area of the optical fiber with and/or without coating. Such way of bonding can be used in particular with a polyimide coating 26, which is convenient as regards the optical fiber 20 manufacture and cost. In this embodiment, a partial erosion (removal) of said coating 26 and/or of said sealing material 22 may occur under glow plug operating process. However the glow plug according to the invention may be designed so that this erosion slows down and even stop, and thus do not affect the operation of the glow plug. A partial degradation of the sealing material 22 and/or of the coating 26 on the distal end of the through-hole that is exposed to the combustion chamber might be therefore part of a normal burn-in process which would neither affect the pressure sensor 24 working nor the glow plug operation. However as the temperature in the sealing area remains relatively low, initial burn-in erosion of the sealing material is limited, even when the sealing material such as a high temperature epoxy is used

In the first embodiment of figures 1 to 5, the through-hole 21 extends in the distal direction as far as the chamfered distal end 18b of the housing where it emerges. In this first embodiment, the sealing material 22 is applied as a sealing sleeve 22 overlapping a distal end portion of the coating 26 and a portion of the distal end tip 23 of the optical fiber 20 which is not covered by such a coating. This sealing sleeve 22 is adapted to fill the space between the internal wall of the through-hole 21 of the outing 13 and said portions of the optical fiber 20 which are covered by the sealing sleeve 22. This sealing sleeve 22 does not extend as far as the distal end 23 of the optical fiber 20, and does not cover said optical pressure sensor 24.

As shown in figures 2 and 3 and particular in figures 4 and 5, said optical pressure sensor 24 is supported by and extends from the distal tip 23 of the optical fiber 23.

Such an optical pressure sensor 24 which may be used in a glow plug according to the invention comprises a sensing cavity and/or membrane, and is associated with an electronic unit linked to a proximal end of said optical fiber 20, said electronic unit including at least one associated light source, at least one photo detector and signal processing means, as described for example in US 2009226128, WO 2005121697, US5385053, or www.optrand.com.

Said electronic unit can be placed outside the glow plug, for example in a remote electric box of the engine, the optical fiber 20 extending outside the body to this box. In such case the whole optical fiber 20 must be free and rotated with the plug when the latter is screwed on the engine.

The second embodiment illustrated on figures 7 to 10 shares the same basic design with the first embodiment, expect as regards the relative position of the pressure sensor 24 and of the distal end tip 23 of the optical fiber 20 with regards to the housing 13.

In this embodiment, the optical fiber 20 is inserted into the longitudinal recess which is realized as a hole 21. The distal end 28b of this hole 21 is remote from the distal end 18b of the housing 13, inside the housing, i.e. inside the central bore 27 of the housing 13. The optical pressure sensor 24 is directly exposed to the gases in the combustion chamber 16 passing through a radial space 31 accommodated between the internal cylindrical wall 32 of the distal end portion 13b of the housing 13 and the external cylindrical wall of the heating rod 14 extending through said distal end portion 13b. Also, it is to be noted in this embodiment that the covering 26 of the optical fiber 20 extends beyond the distal end 28b of the hole 21, and that the sealing material 22, which is realized inside the hole 21, thus bonds said covering 26 to the internal wall of the hole 21. In the embodiment of figures 7 and 8 the electronic unit is made of the above mentioned electronic circuit 29 embedded in the housing 13 of the plug.

The third embodiment illustrated on figures 6b, 11 to 14 differs from the second embodiment by said longitudinal recess and by the distal end 18b of the housing 13.

In this embodiment, the longitudinal recess receiving the optical fiber 20 is realized as shown in figure 6b and comprises a first through-hole 42a, a channel 41b and a second through-hole 42b through nut 17. The distal end 28b of said longitudinal recess is also remote from the distal end 18b of the housing, inside the housing, i.e. inside the central bore 27 of the housing 13. The distal end 18b is made by a distal end cap 30 which is mounted and fixed at the distal end of the main body of the housing 13. This cap 30 is adapted to form the radial space 31 in which the optical pressure sensor 24 is situated and is directly exposed to the gases in the combustion chamber 16 passing through the radial space 31. This radial space 31 is accommodated between the internal cylindrical wall 32 of the distal end cap 30 and the external cylindrical wall of the heating rod 14 extending through said distal end cap 30.

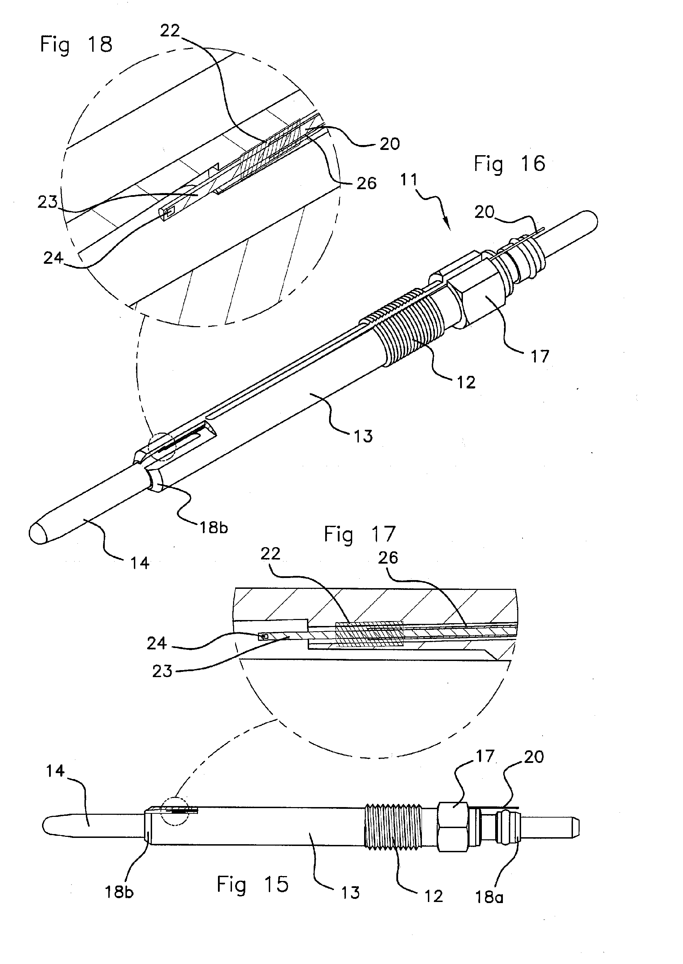

Figures 15 to 18 show a fourth embodiment of a glow plug according to the invention which differs from the third embodiment by the fact that the longitudinal recess and the optical fiber 20 of slightly inclined with regard to the main axial direction of the housing 13 and of its central bore 27. Also, in this fourth embodiment, the covering 26 do not extend beyond the distal end of the through-hole 21, and the sealing material 22 overlaps the distal end of the covering 26 and the naked portion of the distal end of the optical fiber 20 inside the through-hole 21.

There are many other possible variations of the invention. In particular, the invention may be applied to a plug which is not a glow plug, but only a pressure sensor plug, for example in a pump machine. Also, the mounting system of the plug with regard to the cylinder head may be different than the one above described and illustrated in the drawings. The plug according to the invention may also include at least one of the sensor, for example another process sensor and/or a temperature sensor. The optical fiber 20 may be replaced by a bundle. A plug according to the invention may include several optical fibers, either inserted into the same through-hole or in different through-holes. Each optical fiber may be made of silica or saphire or otherwise.

## Claims

1. - A pressure sensing glow plug for measuring a cylinder pressure prevailing in a chamber of a cylinder of a piston(s) machine, comprising:
(i) a body (13) having an external mounting portion (12) adapted to cooperate with a cylinder head bore for mounting said plug on said cylinder,
(ii) a heating rod (14) supported in said body (13) and having a distal portion (14b) axially protruding from said body (13) so as to extend in said chamber when said body is mounted on said cylinder,
(iii) at least one pressure sensing device supported by said body (13) and comprising:
- a pressure sensor arranged to be subjected to said cylinder pressure when said body is mounted on said cylinder, said pressure sensor being adapted to supply a pressure signal representative of said cylinder pressure,
- a signal transmission link extending from said pressure sensor to a proximal end (18a) of said body (13) so as to be able to transmit said pressure signal out of said cylinder,
**characterized in that**:
- said signal transmission link comprises at least one optical fiber (20),
- said pressure sensor is an optical sensor (24) joined to a distal end (23) of said at least one optical fiber (20) and supported thereby so as to extend in said chamber when said body (13) is mounted on said cylinder
- said body (13) comprises a longitudinal recess:
i. extending along said body (13),
ii. having a distal end (28b) emerging from a distal portion of the body extending in the distal direction from said external mounting portion thereof,
and **in that** said at least one optical fiber (20) extends in said longitudinal recess and is accommodated thereby.

2. - A pressure sensing plug according to claim 1, **characterized in that** said body (13) comprises a central axial bore (27) extending between said proximal end (18a) thereof and a distal end (18b) thereof, and **in that** said heating rod (14) is supported in said central axial bore (27) of said body (13).

3. - A pressure sensing plug according to any of claims 1 or 2, **characterized in that** said body (13) comprises a generally cylindrical peripheral wall having a longitudinal axis, and **in that** said longitudinal recess comprises at least one side longitudinal through-hole (21) longitudinally extending through at least a part of the length of said wall.

4. - A pressure sensing plug according to any of claims 1 to 3, **characterized in that** said body (13) comprises a generally cylindrical external face (35) comprising said external mounting portion (12) adapted to cooperate with a cylinder head bore for mounting said plug on said cylinder, and **in that** said longitudinal recess comprises a side longitudinal groove (41a, 41b) recessed from said external face of said body (13) and longitudinally extending along at least a part of the length of said external face.

5. - A pressure sensing plug according to any of claims 1 to 4, **characterized in that** said longitudinal recess and said at least one optical fiber (20) extends at least substantially parallel to a longitudinal axis (34) of said body (13).

6. - A pressure sensing plug according to any of claims 1 to 5, **characterized in that** said at least one optical fiber (20) consists in one optical fiber supporting said optical pressure sensor (24) at its distal end protruding from said distal end (28b) of said longitudinal recess.

7. - A pressure sensing plug according to any of claims 1 to 6, **characterized in that** said distal end (28b) of said longitudinal recess is remote from a distal end (18b) of said body (13), inside said body (13).

8. - A pressure sensing plug according to any of claims 1 to 7, **characterized in that** said distal end (23) of said at least one optical fiber (20) is remote from a distal end (18b) of said body (13), inside said body (13).

9. - A pressure sensing plug according to any of claims 1 to 8, **characterized in that** said longitudinal recess has a proximal end (28a) emerging from a proximal portion of said body (13) extending in the proximal direction from said external mounting portion (12) thereof.

10. - A pressure sensing plug according to any of claims 1 to 9, **characterized in that** said body (13) and said at least one optical fiber (20) are bonded together by a sealing material (22).

11. - A pressure sensing plug according to claim 10, **characterized in that** said sealing material (22) is chosen from the group constituted of solder glass, epoxy resins, and metallic materials.

12. - A pressure sensing plug according to any of claims 1 to 11, **characterized in that** said at least one optical fiber (20) has a coating (26) extending over at least a part of its length.

13. - A pressure sensing plug according to any of claims 10 or 11 and according to claim 12, **characterized in that** said sealing material (22) is applied in a coated portion of said at least one optical fiber (20).

14. - A pressure sensing plug according to any of claims 10 or 11 and according to any of claims 12 or 13, **characterized in that** said sealing material (22) is applied in a bare portion of said at least one optical fiber (20).

15. - A pressure sensing plug according to any of claims 1 to 14, **characterized in that** said optical pressure sensor (24) is integral to said distal end (23) of said at least one optical fiber (20).
